# FASCICULE DE BREVET EUROPEEN

(11) **EP 2 064 867 B1**
(45) Date de publication et mention de la délivrance du brevet: **28.07.2010**
(21) Numéro de dépôt: 07820250.4
(22) Date de dépôt: 17.09.2007
(51) Int. Cl.: H04N 3/15, H04N 5/335

(54) **CAPTEUR D'IMAGE EN DEFILEMENT PAR INTEGRATIONS SUCCESSIVES ET SOMMATION, A PIXELS CMOS ACTIFS**
BEWEGUNG EINES BILDSENSORS MITTELS SUKZESSIVER INTEGRATION UND SUMMIERUNG MIT AKTIVEN CMOS-PIXELN
MOVING IMAGE SENSOR BY SUCCESSIVE INTEGRATION AND SUMMATION, WITH ACTIVE CMOS PIXELS

(30) Priorité: 19.09.2006 FR 0608187
(43) Date de publication de la demande: 03.06.2009
(73) Titulaire: E2V Semiconductors, 38120 Saint Egrève (FR)
(72) Inventeur: BUGNET, Henri, F-38430 Moirans (FR)
(74) Mandataire: Guérin, Michel
(86) Numéro de dépôt international: PCT/EP2007/059777
(87) Numéro de publication internationale: WO 2008/034794

(56) Documents cités:
- EP-A1- 0 738 074
- US-A- 4 614 966
- US-B1- 6 906 749

## Description

L'invention concerne les capteurs d'image linéaire à défilement et intégration de signal (ou capteurs TDI, de l'anglais : "Time Delay Intégration Linear Sensors"), dans lesquels une image d'une ligne de points d'une scène observée est reconstituée par addition d'images successives prises par plusieurs lignes photosensibles observant successivement une même ligne de la scène au fur et à mesure que la scène défile devant le capteur perpendiculairement aux lignes.

Ces capteurs sont utilisés par exemple dans des capteurs d'observation de la terre par satellite. Ils comprennent plusieurs lignes parallèles de pixels photosensibles ; le séquencement des circuits de commande des différentes lignes (contrôle de temps d'exposition puis de lecture des charges photogénérées) est synchronisé par rapport au défilement relatif de la scène et du capteur, de manière que toutes les lignes du capteur voient une seule ligne de la scène observée. Les signaux générés par chaque ligne sont ensuite additionnés point à point pour chaque point de la ligne observée.

Le rapport signal/bruit théorique est amélioré dans le rapport de la racine carrée du nombre N de lignes du capteur. Ce nombre N peut être par exemple de 16 ou 32 pour des applications de contrôle industriel ou des applications d'observation terrestre à partir de l'espace, ou même de 60 à 100 lignes pour des applications médicales (dentaire, mammographie, ...).

Dans les capteurs d'image à transfert de charges (capteurs CCD), l'addition des signaux point par point se faisait naturellement et sans bruit de lecture en vidant dans une ligne de pixels les charges générées et accumulées dans la ligne de pixel précédente, en synchronisme avec le déplacement relatif de la scène et du capteur. La dernière ligne de pixels, ayant accumulé N fois les charges engendrées par la ligne de scène observée, pouvait ensuite être transférée vers un registre de sortie et convertie, lors d'une phase de lecture, en tension ou courant électrique.

La technologie des capteurs d'image a ensuite évolué vers des capteurs à pixels actifs à transistors, qu'on appellera ci-après capteurs CMOS pour simplifier car ils sont en général réalisés en technologie CMOS (complementary-metal-oxyde-semiconducteur) ; dans ces capteurs CMOS il n'y a plus de transfert de charges de pixel à pixel jusqu'à un registre de lecture, mais il y a des pixels actifs à transistors qui recueillent des charges électriques photogénérées et les convertissent directement en une tension ou un courant. Les différentes lignes du capteur fournissent donc successivement des tensions ou courants représentant l'éclairement reçu par la ligne. On ne peut pas facilement additionner ces courants ou tensions ; il est donc difficile de réaliser un capteur à défilement et à intégration de charges.

Des tentatives ont cependant été faites pour réaliser des capteurs CMOS à défilement et intégration de charges, voir par exemple le document US-A-6906749.

On a essayé en particulier d'utiliser des capacités commutées dans lesquelles on intègre des courants successifs reçus, accumulant ainsi sur une même capacité des charges reçues de plusieurs pixels en colonne.

Les systèmes ainsi essayés sont complexes et il serait souhaitable de trouver des solutions alternatives.

Selon l'invention, on propose de convertir en valeurs numériques les signaux issus d'une ligne de pixels, de sommer la valeur numérique correspondant au pixel de rang j de la ligne dans un registre accumulateur de rang j qui contient déjà la somme de i valeurs numériques accumulées correspondant aux pixels de même rang j de i lignes successives, et d'extraire le contenu du registre accumulateur seulement après N étapes d'accumulation, c'est-à-dire lorsqu'il contient la somme de N valeurs numériques accumulées correspondant aux N lignes de pixels du capteur. Il y a donc une matrice de transfert composée de N lignes de registres accumulateurs ; une ligne de registres reçoit, pour l'accumuler au contenu précédent des registres, les contenus successifs des différentes lignes du capteur, selon une permutation circulaire ; le contenu des registres est extrait après N accumulations, selon une permutation circulaire. Lorsque le contenu d'une ligne de registres a été extrait, cette ligne de registres est remise à zéro, et elle est disponible pour recevoir ensuite le contenu de la première ligne de pixels du capteur. A chaque nouvelle période d'exposition correspond une phase d'extraction d'une ligne de registres ; et à chaque nouvelle période d'exposition les valeurs numériques d'une ligne déterminée de pixels s'accumulent aux contenus d'une ligne de registres différente, selon une permutation circulaire.

Ainsi, les valeurs numériques de la première ligne de pixels du capteur se stockent d'abord dans une ligne de registres dont les contenus sont à zéro, puis successivement à chaque nouvelle exposition, selon une permutation circulaire, dans les autres lignes de registres où elles s'accumulent aux contenus déjà présents ; il en est de même des autres lignes de pixels photosensibles : elles se stockent successivement dans les différentes lignes de registres, à chaque fois dans une nouvelle ligne de registres.

L'invention concerne donc un procédé de capture d'image, à défilement et sommation de signal, pour la lecture synchronisée d'une même ligne d'image successivement par N lignes de P pixels photosensibles et la sommation pixel à pixel des signaux lus par les différentes lignes, **caractérisé en ce que :**
- à l'issue de chaque période d'intégration d'une série de périodes d'intégration de charges, on numérise par un convertisseur analogique-numérique les signaux issus des N lignes de pixels, on accumule les signaux numérisés d'une ligne de pixels dans une ligne choisie d'une matrice de transfert qui comporte N lignes de P registres accumulateurs, ceci pour les N lignes de pixels et les N lignes de la matrice de transfert, en modifiant à chaque période d'intégration la correspondance entre la ligne choisie de la matrice de transfert et la ligne de pixels, en synchronisme avec le défilement de l'image devant le capteur de manière qu'une ligne de registres de la matrice de transfert reçoive et accumule successivement au cours de N périodes d'intégration les signaux numérisés de N lignes de pixels ayant vu une même ligne d'image,
- au bout de N périodes d'intégration le contenu d'une ligne déterminée de registres, représentant une ligne d'image observée, est extrait et les registres de cette ligne sont remis à zéro,
- à chaque période d'intégration suivante c'est le contenu d'une autre ligne de registres, selon une permutation circulaire des N lignes, qui est extrait et remis à zéro, la ligne extraite et remise à zéro étant, à l'issue de chaque période d'intégration, celle qui a subi N accumulations après une remise à zéro.

Plus précisément, un pixel de rang j dans une ligne est constitué par un circuit à transistors MOS comportant une sortie reliée à un conducteur de colonne de rang j commun aux N pixels de rang j des différentes lignes, et le procédé comporte les opérations suivantes :
- intégration de charges simultanée dans les NxP pixels, répétée pendant des périodes d'intégration successives ;
- adressage successif de chacune des N lignes de pixels à la fin d'une i^{ième} période d'intégration pour appliquer aux conducteurs de colonne à l'issue de la i^{ième} période d'intégration successivement pour chaque ligne adressée P signaux analogiques correspondant à l'intégration de charges dans les P pixels de la ligne adressée ;
- conversion analogique-numérique pour numériser les P signaux analogiques présents sur les conducteurs de colonne au cours de chaque adressage de ligne, et fournir P valeurs numériques correspondant à une ligne adressée de rang m ;
- accumulation de la valeur numérique correspondant au pixel de rang j d'une ligne adressée, dans un registre accumulateur de rang j d'une ligne de registres d'une matrice de N lignes de P registres accumulateurs,
- au cours de la (i+1)^{ième} période d'intégration, accumulation dans ce même registre accumulateur d'une valeur numérique correspondant à un pixel de rang j d'une autre ligne de pixels, en correspondance avec le défilement de l'image devant les N lignes de pixels,
- à l'issue de la i+1^{ième} période d'intégration, sélection d'une ligne parmi N, la ligne sélectionnée étant une ligne qui a subi N accumulations successives après une remise à zéro du contenu des registres accumulateurs de cette ligne, extraction des valeurs numériques accumulées dans les registres de cette ligne, représentant une ligne d'image observée, et remise à zéro des registres de cette ligne en vue d'une nouvelle série de N périodes d'intégration pour cette ligne,
- permutation circulaire de l'ordre des lignes de registres qui sont sélectionnées pour une extraction et une remise à zéro à l'issue des périodes d'intégration successives.

Si on appelle m le rang de la ligne adressée au cours de la i^{ième} période d'intégration, alors l'autre ligne accumulée avec cette dernière au cours de la (i+1)^{ième} période d'intégration sera en principe une ligne adjacente de rang m+1 telle que l'accumulation dans une même ligne de registres accumulateurs provienne d'une succession de lignes de pixels ordonnée selon une permutation circulaire ; si on fait l'hypothèse que la première ligne de pixels a été stockée dans une première ligne de registres accumulateurs au cours d'un première période d'intégration, alors à la deuxième période d'intégration c'est la deuxième ligne de pixels qui est accumulée dans la première ligne de registres, et ainsi de suite selon une permutation circulaire : à la N^{ième} période d'intégration, c'est la N^{ième} ligne de pixels qui est accumulée dans la première ligne de registres ; la valeur stockée dans la première ligne de registres est alors extraite ; elle représente une première ligne de l'image observée ; cette première ligne de registres est remise à zéro, prête à recevoir de nouvelles valeurs numériques, à nouveau en provenance de la première ligne de pixels, à l'issue de la (N+1)^{ième} périoe d'intégration ; et à l'issue de cette (N+1)^{ième} période d'intégration, la valeur stockée dans la deuxième ligne de registres accumulateurs est extraite ; elle représente une deuxième ligne de l'image observée ; puis elle est remise à zéro. Ainsi de suite, au bout de 2N périodes d'intégration on extrait à nouveau l'information numérique stockée dans la première ligne de registres, représentant une (N+1)^{ième} ligne de l'image observée.

Outre le procédé qui vient d'être défini, l'invention concerne aussi un capteur d'image, à défilement et sommation, permettant la lecture synchronisée d'une même ligne d'image successivement par N lignes de P pixels photosensibles et la sommation pixel à pixel des signaux lus par les différentes lignes, un pixel de rang j dans une ligne étant constitué par un circuit à transistors MOS comportant une sortie reliée à un conducteur de colonne de rang j commun aux N pixels de rang j des différentes lignes, le capteur étant **caractérisé en ce qu**'il comporte :
- un circuit d'adressage successif de chacune des N lignes de pixels pour appliquer aux conducteurs de colonne P signaux analogiques correspondant à l'intégration de charges, pendant une période d'intégration Ti, des P pixels de la ligne adressée ;
- au moins un convertisseur analogique-numérique pour numériser les signaux fournis par les conducteurs de colonne pour chaque ligne adressée, à l'issue de la période d'intégration Ti,
- N lignes de P registres accumulateurs numériques, un registre accumulateur de rang j dans une ligne étant apte à accumuler N signaux numériques obtenus - pendant N périodes d'intégration successives et correspondant aux N pixels de même rang j des différentes lignes, en correspondance avec le défilement de l'image linéaire devant les N lignes de pixels pendant les N périodes d'intégration,
- un circuit pour extraire les valeurs numériques stockées dans une ligne de P registres ayant subi N accumulations successives, ces valeurs représentant une ligne d'image observée,
- un séquenceur apte à appliquer successivement à une ligne de P registres accumulateurs, pendant une série de N périodes d'intégration successives et en correspondance avec le défilement de l'image linéaire, les signaux numérisés issus de chacune des N lignes de pixels, ceci pour chacune des lignes de P registres, et apte à remettre à zéro le contenu des registres de la ligne dont le contenu a été extrait, l'ordre de succession des lignes dont le contenu est extrait puis remis à zéro au cours des périodes d'intégration successives étant une permutation circulaire.

Les registres accumulateurs comportent de préférence une mémoire de sortie pour contenir la valeur accumulée de plusieurs signaux correspondant à des lignes différentes, et un additionneur pour additionner le contenu de la sortie du convertisseur analogique-numérique au contenu de la mémoire de sortie et placer le résultat de l'addition dans cette même mémoire. Si la conversion analogique-numérique se fait sur B bits, la mémoire doit avoir un nombre de bits suffisant pour permettre l'accumulation, sans saturation, de N fois la valeur maximale (2^{B}-1) de la conversion. Par exemple, si N=32, la mémoire doit comporter au moins B+5 bits. Par conséquent on peut prévoir, ce qui est avantageux, que le convertisseur analogique-numérique a une dynamique inférieure de plusieurs bits (de préférence log₂(N) à la dynamique des signaux numériques qu'on extrait du capteur : il n'est pas nécessaire de convertir les signaux avec un convertisseur de grande résolution. La résolution sera obtenue du fait de l'accumulation de N signaux pour chaque ligne d'image observée.

Il y a de préférence P convertisseurs analogiques-numériques, c'est-à-dire un par conducteur de colonne.

D'autres caractéristiques et avantages de l'invention apparaîtront à la lecture de la description détaillée qui suit et qui est faite en référence aux dessins annexés dans lesquels :
- la figure 1 représente un exemple de constitution d'un pixel en technologie CMOS ;
- la figure 2 représente la structure de la circuiterie électronique associée à un conducteur de colonne du capteur.
- la figure 3 représente l'organisation générale du capteur selon l'invention.

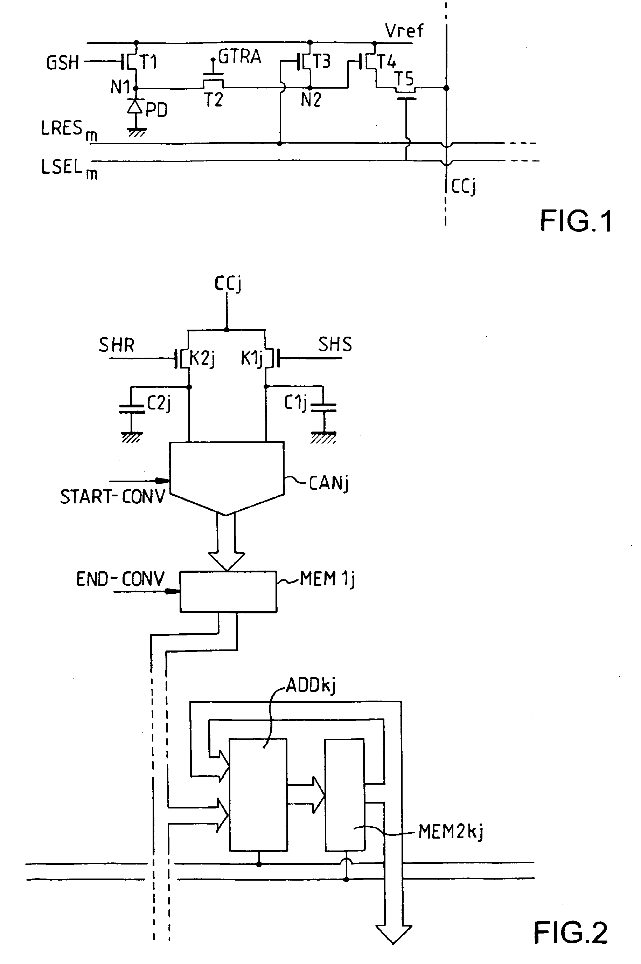

La figure 1 représente la structure d'un pixel actif de technologie CMOS comprenant cinq transistors T1 à T5 et une photodiode PD ; ce pixel est de type connu et peut être utilisé dans la présente invention. Au sein d'une matrice de N lignes de P pixels, le pixel représenté est supposé être un pixel de rang j dans la ligne de pixels de rang m. La structure et le fonctionnement du pixel sont donnés à titre d'exemple pour illustrer l'invention.

La photodiode est connectée en série avec le transistor T1 entre une masse et une tension d'alimentation de référence Vref. Le transistor peut être rendu conducteur brièvement, pour une remise à zéro des charges de la photodiode, par un signal de remise à zéro général GSH agissant simultanément sur tous les pixels de la matrice avant le début d'un temps d'intégration.

Le noeud N1 reliant la photodiode et le transistor T1 accumule des charges au cours du temps d'intégration. Ce noeud N1 peut être relié brièvement à un noeud N2 de stockage de charges par le transistor T2, à la fin d'un temps d'intégration, par un signal de commande de transfert GTRA agissant simultanément sur tous les pixels de la matrice.

Le noeud de stockage N2 peut être remis au potentiel de référence Vref (vidage des charges du noeud N2) par le transistor T3 qui reçoit un signal de commande bref LRESm commun à tous les pixels de la ligne de rang m. Les signaux LRESm correspondant aux différentes lignes (m = 1 à N) sont émis successivement pour les N lignes à l'issue d'une période d'intégration Ti et pendant que commence une période d'intégration suivante.

Le noeud N2 est par ailleurs relié à la grille du transistor suiveur T4 dont le drain est au potentiel Vref et dont la source recopie (à une chute de tension grille source près) le potentiel pris par la grille, c'est-à-dire le potentiel du noeud de stockage N2. La source du transistor T4 est reliée, par l'intermédiaire d'un transistor de sélection de ligne T5, à un conducteur de colonne CCj commun à tous les pixels d'une même colonne de rang j. Le transistor T5 est rendu conducteur par un signal LSELm qui est un signal d'adressage de la ligne de rang m et qui est donc commun à tous les pixels d'une même ligne. Les signaux d'adressage LSELm des différentes lignes (m=1 à N) sont émis successivement à l'issue d'une période d'intégration Ti et pendant que commence une période d'intégration suivante.

Le pixel fonctionne de la manière suivante : après la fin d'un e période d'intégration Ti, les photodiodes ont accumulé des charges en quantité proportionnelle à l'éclairement qu'elles ont reçu. Un signal général de transfert de charges GTRA est émis brièvement pour transférer ces charges du noeud N1 vers le noeud N2 où elles restent stockées au moins le temps nécessaire à leur lecture.

Puis un signal général GSH de définition du temps d'exposition est brièvement émis. Ce signal remet à zéro les charges stockées dans les photodiodes en portant celles-ci au potentiel Vref, et l'intégration de charges ne peut commencer qu'à la fin du signal GSH. Ces deux signaux GTRA et GSH concernent tous les pixels de la matrice à la fois. Ensuite sont émis des signaux de lecture de charges, ligne par ligne.

La première ligne reçoit un signal de sélection de ligne qui relie le transistor T4 du pixel au conducteur de colonne CCj correspondant pendant le temps nécessaire à la lecture puis qui le déconnecte en vue de la lecture des charges des lignes suivantes ; toutes les lignes sont lues successivement pendant la nouvelle période d'intégration. La lecture consiste en une transmission au conducteur de colonne d'un potentiel recopiant le potentiel du noeud N2. Cette lecture est de préférence faite par double échantillonnage de la manière suivante : le potentiel du signal utile représentant les charges photogénérées est d'abord appliqué au conducteur de colonne (et va être mis en mémoire dans une première capacité comme on le verra plus loin) ; puis le noeud de stockage N2 est vidé de ses charges par un bref signal LRESm de mise en conduction du transistor T3 et des autres transistors T3 de la même ligne, et le potentiel pris alors par le noeud N2, représentant un potentiel de niveau de noir, est recopié sur le conducteur de colonne CCj (et va être mis en mémoire dans une deuxième capacité).

La mesure des charges photogénérées dans un pixel de la première ligne est faite par conversion analogique-numérique de la différence des potentiels du signal utile et du niveau de noir.

La deuxième ligne est ensuite lue de la même manière, et ainsi de suite, les N lignes sont lues pendant la période d'intégration de charges qui se termine à l'émission d'un nouveau signal de transfert GTRA.

La figure 2 explique le fonctionnement de l'invention et on a pris pour exemple le cas (non obligatoire) ou la lecture de charges est faite par double échantillonnage.

Le circuit de la figure 2 est le circuit qui est associé à un conducteur de colonne CCj de rang j tel que celui qu'on voit à la figure 1. Le conducteur de colonne CCj est relié alternativement, par des interrupteurs respectifs K1j et K2j, à deux capacités de stockage C1j et C2j, qui vont stocker respectivement le niveau de signal utile et le niveau de noir. Les interrupteurs K1j et K2j sont actionnés à deux instants successifs séparés par la durée de remise à zéro des charges stockées sur le noeud N2. Le signal d'actionnement de K1j est un signal SHR et le signal d'actionnement de K2j est un signal SHS.

Les capacités de stockage C1j et C2j sont reliées entre une masse et chacune des deux entrées d'un convertisseur analogique-numérique CANj. Il y a de préférence un convertisseur par colonne. Pendant la durée d'adressage de la ligne considérée, le potentiel du noeud N2 du pixel est recopié sur le conducteur de colonne CCj. Au début de cette durée, le niveau de tension présent sur le conducteur de colonne est le niveau utile représentant les charges photogénérées dans le pixel de rang j de la ligne adressée. Cette tension est appliquée à la capacité C1j pendant un bref instant défini par le signal SHS (émis successivement pour chacune des lignes adressées et commun à toutes les colonnes), après quoi la capacité conserve cette tension. Puis le signal LRESm est émis pour vider les charges du noeud N2 des pixels de la ligne (signal spécifique de la ligne adressée). Le conducteur de colonne prend alors un potentiel qui définit le niveau de noir ; puis, pendant un bref instant défini par le signal SHR (émis successivement pour chacune des lignes adressées et commun à toutes les colonnes) ce niveau de noir présent sur le conducteur de colonne est appliqué à la capacité de stockage C2j qui le conserve ensuite.

Les capacités C1j et C2j stockent ensuite, pour la durée d'un conversion analogique-numérique, le niveau utile et le niveau de noir correspondant à la ligne adressée. On effectue la conversion analogique-numérique qui transforme la différence des tensions présentes sur les capacités C1j et C2j en une valeur numérique. Le convertisseur exécute la conversion entre un instant de début de conversion, postérieur au signal SHR, et un instant de fin de conversion. Un signal de début de conversion START_CONV est donc utilisé pour activer le convertisseur, et un signal de fin de conversion END_CONV est utilisé pour déclencher le stockage dans une mémoire MEM1j du résultat de la conversion. Les signaux START_CONV et END_CONV, communs à toutes les colonnes, sont renouvelés à chaque nouvelle lecture de ligne.

Le contenu stocké dans la mémoire MEM1j pendant l'adressage de la ligne de pixels de rang m est donc le résultat de la conversion analogique-numérique pour la colonne j et pour la ligne de rang m.

Le résultat de la conversion est accumulé, dans une ligne de registres accumulateurs, avec i-1 valeurs numériques analogues déjà additionnées dans cette ligne de registres accumulateurs. En effet, au bout de i-1 périodes d'intégration successives après une remise à zéro de la ligne de registres accumulateurs, celle-ci contient la somme des i-1 valeurs correspondant à l'observation d'une même ligne de scène par i-1 lignes de pixels successives. A la i^{ième} période d'intégration on ajoute dans la ligne de registres accumulateurs le contenu des mémoires MEM1j (j=1 à P) qui représente la valeur d'une i^{ième} ligne de pixels qui a observé également la même ligne de scène.

Il y a N lignes de registres accumulateurs et le contenu d'une ligne de pixels adressée à un instant donné après la fin de la i^{ième} période d'intégration est additionné à celle des lignes de registres accumulateurs (et pas une autre ligne) qui a déjà reçu i-1 valeurs accumulées après une remise à zéro. La ligne suivante de pixels qui est ensuite adressée, toujours à la suite de la i^{ième} période d'intégration, est additionnée à la ligne suivante de registres, et ainsi de suite selon une permutation circulaire des lignes de registres. Par permutation circulaire on entend le fait que si la ligne de registres est la dernière ligne (la N^{ième} ligne), alors la ligne suivante est la première ligne. De même, si la ligne de pixels adressée est la N^{ième} ligne de pixels, alors la ligne suivante qui est adressée est la première ligne de pixels.

En régime continu, parmi les N lignes de registres accumulateurs, il y en a une et une seule qui a accumulé N-1 valeurs successives à la fin de la i^{ième} période d'intégration sans avoir été remise à zéro. Cette ligne reçoit alors, à la fin de la i^{ième} période d'intégration, une N^{ième} valeur en provenance d'une ligne de pixels. Cette ligne de registres accumulateurs est alors lue. Elle représente la valeur numérique des pixels d'une ligne de la scène observée accumulée sur l'ensemble des N lignes au fur et à mesure du déplacement relatif synchronisé de la scène et du capteur. Après cette lecture, cette ligne de registres est remise à zéro. Les autres lignes de registres accumulateurs continuent leur fonction d'accumulation jusqu'à avoir stocké N valeurs. A la (i+1)^{ème} période d'intégration c'est la ligne de registres suivante qui est lue et remise à zéro, et ainsi de suite selon une permutation circulaire.

Un registre accumulateur comprend essentiellement deux éléments qui sont un élément d'additionneur ADDkj et une case de mémoire MEM2kj ; l'indice k désigne le rang de la ligne de registres accumulateurs (k varie de 1 à N) et l'indice j désigne encore le rang dans la ligne ; dans la ligne de registres il y a donc P éléments d'additionneurs ADDkj et P cases de mémoire MEM2kj. Dans l'ensemble des N lignes de registres, il y a NxP éléments d'additionneur et NxP cases de mémoire.

Les entrées d'un élément additionneur ADDkj reçoivent le contenu de la mémoire MEM1j et le contenu de la mémoire MEM2kj respectivement ; la sortie de l'élément additionneur fournit un nouveau contenu à stocker dans la case de mémoire MEM2kj.

La circuiterie d'accumulation des résultats de conversion analogique-numérique comporte des circuits de séquencement et d'adressage non représentés sur la figure 2, pour effectuer les permutations circulaires indiquées plus haut. Ces circuits sélectionnent la ligne de registres accumulateurs de rang k dans laquelle on va accumuler les valeurs d'une ligne de pixels de rang m adressée et convertie à un moment donné, à la fin d'une i^{ième} période d'intégration. Ils aiguillent donc le contenu de la mémoire MEM1 vers la ligne de registres accumulateurs de rang k à ce moment, et vers une ligne de registre suivante à la fin d'une période d'intégration suivante, et ils activent les opérations d'addition et de stockage dans la ligne sélectionnée de registres accumulateurs.

Ces circuits de séquencement désignent aussi celle des lignes de registres qui doit être lue à un moment donné (celle qui a subi N accumulations après une remise à zéro) et qui doit être remise à zéro immédiatement après lecture. Ils transmettent vers une sortie générale de la matrice de registres accumulateurs la sortie des cases de mémoire de cette ligne de registres ainsi sélectionnée. Une valeur est ainsi sortie à chaque période d'intégration Ti et la périodicité de sélection d'une même ligne de registres pour fournir une valeur de sortie est de N périodes d'intégration élémentaires.

La capacité (en nombre de bits) de chaque case de mémoire MEM2kj est telle qu'on puisse accumuler dans cette case la somme de N valeurs numériques correspondant à un pixel. En supposant que la dynamique du convertisseur analogique-numérique est de B bits, la capacité de la mémoire MEM1j est de B bits, mais la capacité des registres accumulateurs est supérieure et est d'au moins B+b bits où b (entier) est tel que 2^{b-1}<N<=2^{b}. Une particularité de l'invention est donc que le capteur comporte un convertisseur analogique-numérique de capacité inférieure de plusieurs bits à la dynamique maximale des données qui peuvent sortir du capteur. En principe, la différence entre les deux dynamiques est b tel que log₂(N-1)<b<=log₂(N).

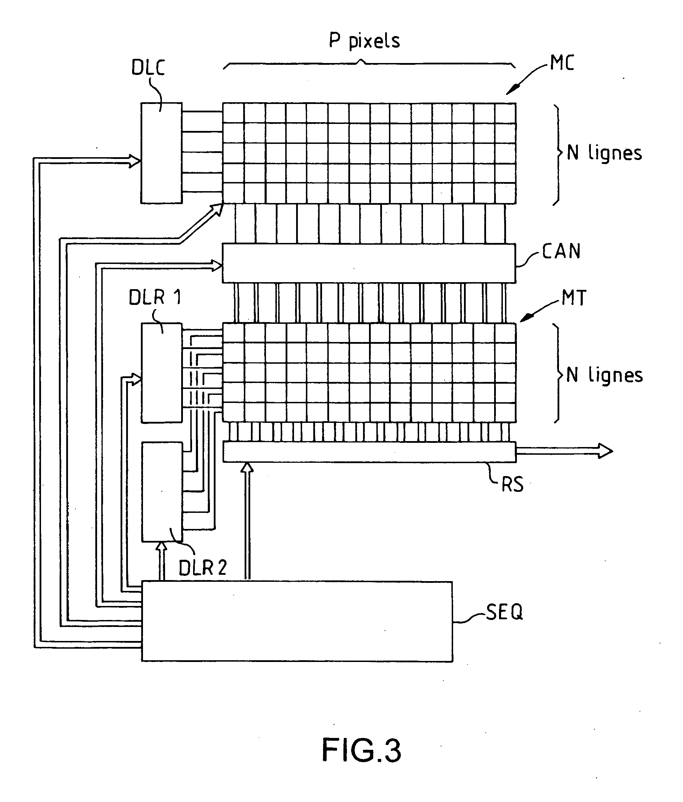

La figure 3 représente l'architecture générale du capteur d'image selon l'invention. On voit la matrice MC de N lignes de P pixels actifs photosensibles, adressable par un décodeur de ligne DLC, le convertisseur analogique-numérique CAN qui comporte, pour chaque colonne un convertisseur élémentaire tel que celui qui est représenté au haut de la figure 2 (interrupteurs, capacités C1j, C2j, convertisseur CANj, mémoire MEM1j).

On voit également la matrice MT de N lignes de P registres accumulateurs tels que celui qui est représenté au bas de la figure 2 (additionneur ADDkj et mémoire MEM2kj).

Un premier décodeur de ligne DLR1 permet de sélectionner une ligne de registres accumulateurs de rang k en correspondance avec une ligne de pixels de rang m, la correspondance étant la permutation circulaire expliquée plus haut. Cette sélection par le décodeur DLR1 agit pour appliquer au registre le contenu des mémoires MEM1j qui constituent la sortie du convertisseur CAN. Le décodeur DLR1 sélectionne N lignes successives à l'issue d'une période d'intégration, pendant l'adressage des N lignes de pixels.

Un deuxième décodeur de ligne DLR2 agit pour sélectionner celle des lignes de registres accumulateurs qui a terminé N accumulations successives après une remise à zéro. Le contenu des registres de la ligne ainsi sélectionnée par le décodeur DLR2 est extrait et constitue le signal de sortie du capteur. L'extraction se fait par exemple en mettant le contenu des registres de la ligne sélectionnée dans un registre de sortie RS qui sera lu ensuite. L'extraction se fait, comme indiqué plus haut, après la N^{ième} étape d'accumulation dans la ligne sélectionnée, et elle est suivie d'une remise à zéro du contenu des registres accumulateurs de la ligne sélectionnée. L'ordre de sélection des lignes est une permutation circulaire, comme indiqué plus haut.

L'ensemble des décodeurs de ligne et le registre de lecture est commandé par un séquenceur SEQ qui établit les permutations circulaires. Le séquenceur produit également tous les signaux de commande nécessaires pour les lignes de pixels et pour le convertisseur CAN.

## Revendications

1. Procédé de capture d'image, à défilement et sommation de signal, pour la lecture synchronisée d'une même ligne d'image successivement par N lignes de P pixels photosensibles et la sommation pixel à pixel des signaux lus par les différentes lignes, **caractérisé en ce que** :
- à l'issue de chaque période d'intégration d'une série de périodes d'intégration de charges, on numérise par un convertisseur analogique-numérique (CAN) les signaux issus des N lignes de pixels, on accumule les signaux numérisés d'une ligne de pixels dans une ligne choisie d'une matrice de transfert (MT) qui comporte N lignes de P registres accumulateurs, ceci pour les N lignes de pixels et les N lignes de la matrice de transfert, en modifiant à chaque période d'intégration la correspondance entre la ligne choisie de la matrice de transfert et la ligne de pixels, en synchronisme avec le défilement de l'image devant le capteur de manière qu'une ligne de registres de la matrice de transfert reçoive et accumule successivement au cours de N périodes d'intégration les signaux numérisés de N lignes de pixels ayant vu une même ligne d'image,
- au bout de N périodes d'intégration le contenu d'une ligne déterminée de registres, représentant une ligne d'image observée, est extrait et les registres de cette ligne sont remis à zéro,
- à chaque période d'intégration suivante c'est le contenu d'une autre ligne de registres, selon une permutation circulaire des N lignes, qui est extrait et remis à zéro, la ligne extraite et remise à zéro étant, à l'issue de chaque période d'intégration, celle qui a subi N accumulations après une remise à zéro.

2. Procédé de capture d'image selon la revendication 1, dans lequel un pixel de rang j dans une ligne est constitué par un circuit à transistors MOS comportant une sortie reliée à un conducteur de colonne (CCj) de rang j commun aux N pixels de rang j des différentes lignes, **caractérisé par** les opérations suivantes :
- intégration de charges simultanée dans les NxP pixels, répétée pendant des périodes d'intégration successives ;
- adressage successif de chacune des N lignes de pixels à la fin d'une i^{ième} période d'intégration pour appliquer aux conducteurs de colonne à l'issue de la i^{ième} période d'intégration successivement pour chaque ligne adressée P signaux analogiques correspondant à l'intégration de charges dans les P pixels de la ligne adressée ;
- conversion analogique-numérique pour numériser les P signaux analogiques présents sur les conducteurs de colonne au cours de chaque adressage de ligne, et fournir P valeurs numériques correspondant à une ligne adressée de rang m ;
- accumulation de la valeur numérique correspondant au pixel de rang j d'une ligne adressée, dans un registre accumulateur (MEM2kj) de rang j d'une ligne de registres d'une matrice (MT) de N lignes de P registres accumulateurs,
- au cours de la (i+1)^{ème} période d'intégration, accumulation dans ce même registre accumulateur (MEM2kj) d'une valeur numérique correspondant à un pixel de rang j d'une autre ligne de pixels, en correspondance avec le défilement de l'image linéaire devant les N lignes de pixels,
- à l'issue de la (i+1)^{ième} période d'intégration, sélection d'une ligne parmi N, la ligne sélectionnée étant une ligne qui a subi N accumulations successives après une remise à zéro du contenu des registres accumulateurs de cette ligne, extraction des valeurs numériques accumulées dans les registres de cette ligne, représentant une ligne d'image observée, et remise à zéro des registres de cette ligne en vue d'une nouvelle série de N périodes d'intégration pour cette ligne,
- permutation circulaire de l'ordre des lignes de registres qui sont sélectionnées pour une extraction et une remise à zéro à l'issue des périodes d'intégration successives.

3. Capteur d'image, à défilement et sommation, permettant la lecture synchronisée d'une même ligne d'image successivement par N lignes de P pixels photosensibles et la sommation pixel à pixel des signaux lus par les différentes lignes, un pixel de rang j dans une ligne étant constitué par un circuit à transistors MOS comportant une sortie reliée à un conducteur de colonne (CCj) de rang j commun aux N pixels de rang j des différentes lignes, le capteur étant **caractérisé en ce qu'**il comporte :
- un circuit d'adressage successif de chacune des N lignes de pixels pour appliquer aux conducteurs de colonne P signaux analogiques correspondant à l'intégration de charges, pendant une période d'intégration Ti, des P pixels de la ligne adressée ;
- au moins un convertisseur analogique-numérique pour numériser les signaux fournis par les conducteurs de colonne pour chaque ligne adressée, à l'issue de la période d'intégration Ti,
- N lignes de P registres accumulateurs numériques, un registre accumulateur de rang j dans une ligne étant apte à accumuler N signaux numériques obtenus pendant N périodes d'intégration successives et correspondant aux N pixels de même rang j des différentes lignes, en correspondance avec le défilement de l'image linéaire devant les N lignes de pixels pendant les N périodes d'intégration,
- un circuit (DLR2, RS) pour extraire les valeurs numériques stockées dans une ligne de P registres ayant subi N accumulations successives, ces valeurs représentant une ligne d'image observée,
- un séquenceur (SEQ) apte à appliquer successivement à une ligne de P registres accumulateurs, pendant une série de N périodes d'intégration successives et en correspondance avec le défilement de l'image linéaire, les signaux numérisés issus de chacune des N lignes de pixels, ceci pour chacune des lignes de P registres, et apte à remettre à zéro le contenu des registres de la ligne dont le contenu a été extrait, l'ordre de succession des lignes dont le contenu est extrait puis remis à zéro au cours des périodes d'intégration successives étant une permutation circulaire.

4. Capteur d'image selon la revendication 3, **caractérisé en ce que** les registres accumulateurs comportent une mémoire de sortie (MEM2kj) pour contenir la valeur accumulée de plusieurs signaux correspondant à des lignes différentes, et un additionneur (ADDkj) pour additionner le contenu de la sortie du convertisseur analogique-numérique (MEM1j, CAN) au contenu de la mémoire de sortie et placer le résultat de l'addition dans cette mémoire.

5. Capteur d'image selon la revendication 4, **caractérisé en ce que** la conversion analogique-numérique se fait sur B bits, et la mémoire (MEM2kj) a un nombre de bits suffisant pour permettre l'accumulation, sans saturation, de N fois la valeur maximale 2^{B}-1 de sortie du convertisseur.

6. capteur d'image linéaire selon la revendication 5, **caractérisé en ce que** la mémoire a une dynamique d'au moins B+b bits où b, entier, est compris entre log₂(N-1) et log₂(N).

## Claims

1. Method of image capture, of the traveling and signal-summing type, for the synchronized readout of one and the same image line successively by N lines of P photosensitive pixels and the pixel by pixel summation of the signals read out by the various lines, **characterized in that**:
- on completion of each integration period of a series of charge integration periods, the signals arising from the N lines of pixels are digitized by an analog-digital converter (ADC), the digitized signals of a line of pixels are accumulated in a chosen line of a transfer matrix (MT) which comprises N lines of P accumulator registers, doing so for the N lines of pixels and the N lines of the transfer matrix, while modifying at each integration period the correspondence between the chosen line of the transfer matrix and the line of pixels, in synchronism with the traveling of the image past the sensor in such a manner that a line of registers of the transfer matrix receives and accumulates successively in the course of N integration periods the digitized signals of N lines of pixels having seen one and the same image line,
- after N integration periods the content of a determined line of registers, representing an observed image line, is extracted and the registers of this line are reset to zero,
- at each following integration period it is the content of another line of registers, according to a circular permutation of the N lines, which is extracted and reset to zero, the line extracted and reset to zero being, on completion of each integration period, that which has undergone N accumulations after a reset to zero.

2. Method of image capture according to Claim 1, in which a pixel of rank j in a line is made up of a circuit with MOS transistors comprising an output linked to a column conductor (CCj) of rank j common to the N pixels of rank j of the various lines, **characterized by** the following operations:
- simultaneous integration of charges in the NxP pixels, repeated during successive integration periods;
- successive addressing of each of the N lines of pixels at the end of an i^{th} integration period so as to apply to the column conductors on completion of the i^{th} integration period successively for each addressed line P analog signals corresponding to the integration of charges in the P pixels of the addressed line;
- analog-digital conversion so as to digitize the P analog signals present on the column conductors in the course of each line addressing, and provide P digital values corresponding to an addressed line of rank m;
- accumulation of the digital value corresponding to the pixel of rank j of an addressed line, in an accumulator register (MEM2kj) of rank j of a line of registers of a matrix (MT) of N lines of P accumulator registers,
- in the course of the (i+1)^{th} integration period, accumulation in this same accumulator register (MEM2kj) of a digital value corresponding to a pixel of rank j of another line of pixels, in correspondence with the traveling of the linear image past the N lines of pixels,
- on completion of the (i+1)^{th} integration period, selection of one line from among N, the selected line being a line which has undergone N successive accumulations after a reset to zero of the content of the accumulator registers of this line, extraction of the digital values accumulated in the registers of this line, representing an observed image line, and resetting to zero of the registers of this line with a view to a new series of N integration periods for this line,
- circular permutation of the order of the register lines which are selected for an extraction and a resetting to zero on completion of the successive integration periods.

3. Image sensor, of the traveling and summing type, allowing the synchronized readout of one and the same image line successively by N lines of P photosensitive pixels and the pixel by pixel summation of the signals read out by the various lines, a pixel of rank j in a line being made up of a circuit with MOS transistors comprising an output linked to a column conductor (CCj) of rank j common to the N pixels of rank j of the various lines, the sensor being **characterized in that** it comprises:
- a successive addressing circuit for each of the N lines of pixels for applying to the column conductors P analog signals corresponding to the integration of charges, during an integration period Ti, of the P pixels of the addressed line;
- at least one analog-digital converter for digitizing the signals provided by the column conductors for each addressed line, on completion of the integration period Ti,
- N lines of P digital accumulator registers, an accumulator register of rank j in a line being able to accumulate N digital signals obtained during N successive integration periods and corresponding to the N pixels of like rank j of the various lines, in correspondence with the traveling of the linear image past the N lines of pixels during the N integration periods,
- a circuit (DLR2, RS) for extracting the digital values stored in a line of P registers having undergone N successive accumulations, these values representing an observed image line,
- a sequencer (SEQ) able to successively apply to a line of P accumulator registers, during a series of N successive integration periods and in correspondence with the travel of the linear image, the digitized signals arising from each of the N lines of pixels, doing so for each of the lines of P registers, and able to reset to zero the content of the registers of the line whose content has been extracted, the order of succession of the lines whose content is extracted and then reset to zero in the course of the successive integration periods being a circular permutation.

4. Image sensor according to Claim 3, **characterized in that** the accumulator registers comprise an output memory (MEM2kj) for containing the accumulated value of several signals corresponding to different lines, and an adder (ADDkj) for adding the content of the output of the analog-digital converter (MEM1j, ADC) to the content of the output memory and placing the result of the addition in this memory.

5. Image sensor according to Claim 4, **characterized in that** the analog-digital conversion is done on B bits, and the memory (MEM2kj) has a sufficient number of bits to allow the accumulation, without saturation, of N times the maximum output value 2^{B}-1 of the converter.

6. Linear image sensor according to Claim 5, **characterized in that** the memory has a dynamic range of at least B+b bits where b, an integer, lies between log₂(N-1) and log₂(N).

## Patentansprüche

1. Bilderfassungsverfahren, mit Durchlauf und Signalsummierung, zum synchronisierten Lesen der gleichen Bildzeile nacheinander durch N Zeilen von P lichtempfindlichen Pixeln und zur Pixel-für-Pixel-Summierung der von den verschiedenen Zeilen gelesenen Signale, **dadurch gekennzeichnet, dass**:
- nach jeder Integrationsperiode einer Reihe von Ladungsintegrationsperioden die von den N Pixelzeilen stammenden Signale durch einen Analog/Digital-Wandler' (CAN) digitalisiert werden, die digitalisierten Signale einer Pixelzeile in einer gewählten Zeile einer Transfermatrix (MT) gesammelt werden, die N Zeilen von P Sammelregistern aufweist, dies für die N Pixelzeilen und die N Zeilen der Transfermatrix, indem in jeder Integrationsperiode die Entsprechung zwischen der gewählten Zeile der Transfermatrix und der Pixelzeile synchron mit dem Durchlauf des Bilds vor dem Sensor verändert wird, damit eine Zeile von Registern der Transfermatrix nacheinander während N Integrationsperioden die digitalisierten Signale von N Pixelzeilen empfängt und sammelt, die die gleiche Bildzeile gesehen haben,
- nach N Integrationsperioden der Inhalt einer bestimmten Zeile von Registern, die eine beobachtete Bildzeile repräsentiert, entnommen wird und die Register dieser Zeile auf Null zurückgesetzt werden,
- in jeder folgenden Integrationsperiode es der Inhalt einer anderen Zeile von Registern gemäß einer zirkularen Permutation der N Zeilen ist, die entnommen und auf Null zurückgesetzt wird, wobei die entnommene und auf Null zurückgesetzte Zeile nach jeder Integrationsperiode diejenige ist, die N Sammelvorgänge nach einer Nullrücksetzung erfahren hat.

2. Bilderfassungsverfahren nach Anspruch 1, bei dem ein Pixel des Rangs j in einer Zeile aus einer Schaltung mit MOS-Transistoren besteht, die einen Ausgang aufweist, der mit einem Spaltenleiter (CCj) des Rangs j verbunden ist, der den N Pixeln des Rangs j der verschiedenen Zeilen gemeinsam ist, **gekennzeichnet durch** die folgenden Vorgänge:
- gleichzeitige Ladungsintegration in den NxP Pixeln, wiederholt während aufeinander Integrationsperioden;
- aufeinanderfolgende Ansteuerung jeder der N Pixelzeilen am Ende einer i-ten Integrationsperiode, um an die Zeilenleiter am Ende der i-ten Integrationsperiode nacheinander für jede i-te angesteuerte Zeile P analoge Signale anzulegen, die der Ladungsintegration in die P Pixel der angesteuerten Zeile entsprechen;
- Analog/Digital-Umwandlung, um die während jeder Zeilenansteuerung in den Spaltenleitern vorhandenen P analogen Signale zu digitalisieren und P digitale Werte zu liefern, die einer angesteuerten Zeile des Rangs m entsprechen;
- Sammeln des dem Pixel des Rangs j einer angesteuerten Zeile entsprechenden digitalen Werts in einem Sammelregister (MEM2kj) des Rangs j einer Zeile von Registern einer Matrix (MT) von N Zeilen von P Sammelregistern,
- während der (i+1)-ten Integrationsperiode, Sammeln in diesem gleichen Sammelregister (MEM2kj) eines digitalen Werts entsprechend einem Pixel des Rangs j einer anderen Pixelzeile, entsprechend dem Durchlauf des linearen Bilds vor den N Pixelzeilen,
- nach der (i+1)-ten Integrationsperiode, Auswahl einer von N Zeilen, wobei die ausgewählte Zeile eine Zeile ist, die N aufeinanderfolgende Sammelvorgänge nach einer Nullrücksetzung des Inhalts der Sammelregister dieser Zeile erfahren hat, Entnahme der in den Registern dieser Zeile gesammelten digitalen Werte, die eine beobachtete Bildzeile darstellen, und Nullrücksetzung der Register dieser Zeile für eine neue Reihe von N Integrationsperioden für diese Zeile,
- zirkulare Permutation der Reihenfolge der Zeilen von Registern, die für eine Entnahme und eine Nullrücksetzung am Ende der aufeinanderfolgenden Integrationsperioden ausgewählt werden.

3. Bildsensor mit Durchlauf und Summierung, der das synchronisierte Lesen der gleichen Bildzeile nacheinander durch N Zeilen von P lichtempfindlichen Pixeln und die Pixel-für-Pixel-Summierung der von den verschiedenen Zeilen gelesenen Signale erlaubt, wobei ein Pixel des Rangs j in einer Zeile aus einer Schaltung mit MOS-Transistoren besteht, die einen Ausgang aufweist, der mit einem Spaltenleiter (CCj) des Rangs j verbunden ist, der den N Pixeln des Rangs j der verschiedenen Zeilen gemeinsam ist, wobei der Sensor **dadurch gekennzeichnet ist, dass** er aufweist:
- eine Schaltung zur aufeinanderfolgenden Ansteuerung jeder der N Pixelzeilen, um an die Spaltenleiter P analoge Signale anzulegen, die der Ladungsintegration, während einer Integrationsperiode Ti, der P Pixel der angesteuerten Zeile entsprechen;
- mindestens einen Analog/Digital-Wandler, um die von den Spaltenleitern für jede angesteuerte Zeile gelieferten Signale nach der Integrationsperiode Ti zu digitalisieren,
- N Zeilen von P digitalen Sammelregistern, wobei ein Sammelregister des Rangs j in einer Zeile N digitale Signale sammeln kann, die während N aufeinanderfolgenden Integrationsperioden erhalten wurden und den N Pixeln des gleichen Rangs j der verschiedenen Zeilen entsprechen, entsprechend dem Durchlauf des linearen Bilds vor den N Pixelzeilen während den N Integrationsperioden,
- eine Schaltung (DLR2, RS), um die digitalen Werte zu entnehmen, die in einer Zeile von P Registern gespeichert sind, die N aufeinanderfolgende Sammelvorgänge erfahren haben, wobei diese Werte eine beobachtete Bildzeile darstellen,
- eine Ablaufsteuerung (SEQ), die nacheinander an eine Zeile von P Sammelregistern während eine Reihe von N aufeinanderfolgenden Integrationsperioden und entsprechend dem Durchlauf des linearen Bilds die digitalen Signale anlegen kann, die von jeder der N Pixelzeilen stammen, dies für jede der Zeilen von P Registern, und den Inhalt der Register der Zeile auf Null zurücksetzen kann, deren Inhalt entnommen wurde, wobei die Reihenfolge der Zeilen, deren Inhalt während der aufeinanderfolgenden Integrationsperioden entnommen und dann auf Null zurückgesetzt wird, eine zirkulare Permutation ist.

4. Bildsensor nach Anspruch 3, **dadurch gekennzeichnet, dass** die Sammelregister einen Ausgangsspeicher (MEM2kj), um den gesammelten Wert mehrerer Signale zu enthalten, die verschiedenen Zeilen entsprechen, und ein Addierglied (ADDkj) aufweisen, um den Inhalt des Ausgangs des Analog/Digital-Wandlers (MEM1j, CAN) zum Inhalt des Ausgangsspeichers zu addieren und das Ergebnis der Addition in diesem Speicher anzuordnen.

5. Bildsensor nach Anspruch 4, **dadurch gekennzeichnet, dass** die Analog/Digital-Umwandlung über B Bits erfolgt, und der Speicher (MEM2kj) eine ausreichende Zahl von Bits hat, um das Sammeln, ohne Sättigung, von N Mal dem maximalen Ausgangswert 2^{B}-1 des Wandlers zu erlauben.

6. Linearer Bildsensor nach Anspruch 5, **dadurch gekennzeichnet, dass** der Speicher eine Dynamik von mindestens B+b Bits hat, wobei b, eine ganze Zahl, zwischen log₂(N-1) und log₂(N) liegt.
